# EUROPÄISCHE PATENTSCHRIFT

(11) **EP 2 910 799 B1**
(45) Veröffentlichungstag und Bekanntmachung des Hinweises auf die Patenterteilung: **21.12.2016**
(21) Anmeldenummer: 14199737.9
(22) Anmeldetag: 22.12.2014
(51) Int. Cl.: F16B 7/06

(54) **Zug-Druck-Stange**
Push-pull rod
Pince de traction-compression

(30) Priorität: 21.02.2014 DE 202014100782 U
(43) Veröffentlichungstag der Anmeldung: 26.08.2015
(73) Patentinhaber: RO-RA Aviation Systems GmbH, 4862 Schörfling a. Attersee (AT)
(72) Erfinder: Haller, Matthias, 4862 Schörfling (AT)
(74) Vertreter: Lösch, Christoph Ludwig Klaus

(56) Entgegenhaltungen:
- DE-U1-202012 103 223
- DE-U1-202012 103 224

## Beschreibung

Die Erfindung betrifft eine Zug-Druck-Stange, insbesondere nach dem Oberbegriff des Anspruchs 1 (DE 20 2012 103224 U1).

Zug-Druck-Stangen, die beispielsweise im Flugzeugbau eingesetzt werden, weisen im Allgemeinen einen im Wesentlichen rohrförmigen Körper auf, an dessen Enden sich jeweils eine Befestigungsvorrichtung zur Montage der Zug-Druck-Stange an Montagepunkten befindet. Die Länge der Zug-Druck-Stange ist hierbei beispielsweise über eine oder mehrere Gewindeanordnungen verstellbar, um eine Anpassung an einen vorgegebenen Abstand zwischen den Montagepunkten vornehmen zu können.

Der Erfindung liegt die Aufgabe zugrunde, eine platzsparende Zug-Druck-Stange anzubieten.

Diese Aufgabe wird durch die Merkmale des Schutzanspruchs 1 gelöst. Vorteilhafte Ausführungsformen sind in den Unteransprüchen beschrieben.

Erfindungsgemäß weist die Zug-Druck-Stange einen hohlzylindrischen Mittelkörper, zumindest eine Befestigungsvorrichtung mit einem Kupplungselement und einem daran angeordneten Schaft, zumindest ein Anschlussstück und zumindest eine Reduzierhülse zur Verbindung des Anschlussstückes mit dem Mittelkörper auf. Die Befestigungsvorrichtung ist zur Längenveränderung der Zug-Druck-Stange über eine Gewindeanordnung drehbar mit dem Anschlussstück verbunden. Die Reduzierhülse weist einen ersten, der Befestigungsvorrichtung zugewandten Teilbereich mit einem ersten Außendurchmesser und einen zweiten, dem Mittelkörper zugewandten Teilbereich mit einem zweiten Außendurchmesser, der kleiner ist als der erste Außendurchmesser, auf. Der Außendurchmesser des Mittelkörpers ist kleiner ist als der erste Außendurchmesser der Reduzierhülse.

Die Reduzierhülse ist somit zwischen dem Anschlussstück und dem Mittelkörper positioniert und erlaubt eine Reduzierung des Außendurchmessers des Mittelkörpers. Zugleich erlaubt es die Reduzierhülse jedoch auch, das Anschlussstück aufzunehmen. Im Bereich des Mittelkörpers (d.h. im Mittelbereich der Zug-Druck-Stange) wird damit weniger Platz benötigt, während gleichzeitig das Anschlussstück und die Befestigungsvorrichtung unverändert bleiben können. Die erfindungsgemäße Zug-Druck-Stange ist also platzsparender als herkömmliche Zug-Druck-Stangen.

In einer bevorzugten Ausführungsform ist die Reduzierhülse über eine erste Gewindeanordnung mit dem Anschlussstück und/oder über eine zweite Gewindeanordnung mit dem Mittelkörper verbunden. Insbesondere kann hierbei die erste Gewindeanordnung aus einem auf einer äußeren Mantelfläche des Anschlussstückes ausgebildeten Gewinde und einem auf einer innenliegenden Mantelfläche des ersten Teilbereich der Reduzierhülse ausgebildeten Gewinde gebildet sein. Auch kann die zweite Gewindeanordnung aus einem auf einer äußeren Mantelfläche des zweiten Teilbereichs der Reduzierhülse ausgebildeten Gewinde und einem auf einer innenliegenden Mantelfläche des Mittelkörpers ausgebildeten Gewinde gebildet sein. Auf diese Weise ist eine zuverlässige, lösbare Verbindung zwischen den einzelnen Bauteilen möglich.

In einer weiteren vorteilhaften Ausführungsform ist die die Reduzierhülse über eine erste Presspassung mit dem Anschlussstück verbunden und/oder über eine zweite Presspassung mit dem Mittelkörper verbunden. Dies führt zu einer besonders zuverlässigen Verbindung zwischen den einzelnen Bauteilen.

In einer weiteren bevorzugten Ausführungsform ist die Reduzierhülse über eine erste Klebeverbindung mit dem Anschlussstück verbunden und/oder über eine zweite Klebeverbindung mit dem Mittelkörper verbunden. Auch dies führt zu einer besonders zuverlässigen Verbindung zwischen den einzelnen Bauteilen.

In einer weiteren vorteilhaften Ausführungsform weist die Zug-Druck-Stange einen an das Kupplungselement anbringbaren Schnappbolzen auf, welcher an den Außenumfang des Anschlussstückes anklappbar ist. Auf diese Weise kann eine unbeabsichtigte Längenveränderung der Zug-Druck-Stange verhindert werden.

In einer weiteren vorteilhaften Ausführungsform ist um den ersten Teilbereich der Reduzierhülse eine Manschette ausgebildet. In besonders vorteilhafter Weise ist an die Manschette ein Halteband angebracht. Das Halteband wiederum kann mit dem Schnappbolzen verbunden sein und auf diese Weise als Verliersicherung für den Schnappbolzen dienen.

Die Erfindung ist anhand eines Ausführungsbeispiels in den Zeichnungsfiguren weiter erläutert. Es zeigen:
- Fig. 1: eine perspektivische Ansicht einer Zug-Druck-Stange;
- Fig. 2: eine weitere Ansicht der Zug-Druck-Stange aus Fig. 1;
- Fig. 3: eine Schnittdarstellung der Zug-Druck-Stange entlang der Schnittebene A1 -A1 in Fig. 2;
- Fig. 4: eine vergrößerte Darstellung des Bereichs B1 - 1 aus Fig. 3; und
- Fig. 5: eine vergrößerte Darstellung des Bereichs C1 - 1 aus Fig. 3.

Gleiche bzw. gleichwirkenden Komponenten sind in den Zeichnungsfiguren jeweils mit gleichen Bezugszeichen gekennzeichnet.

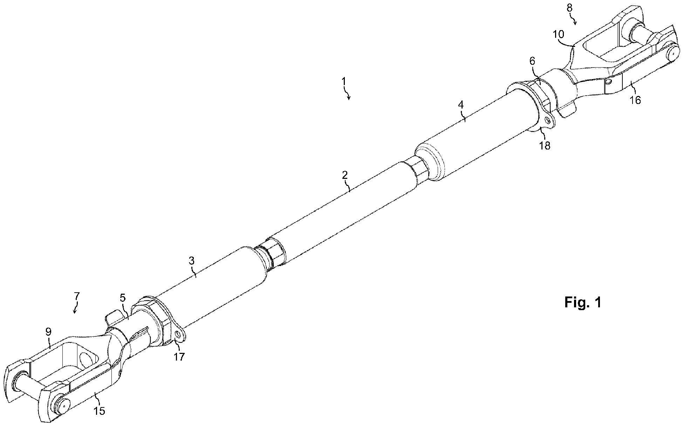

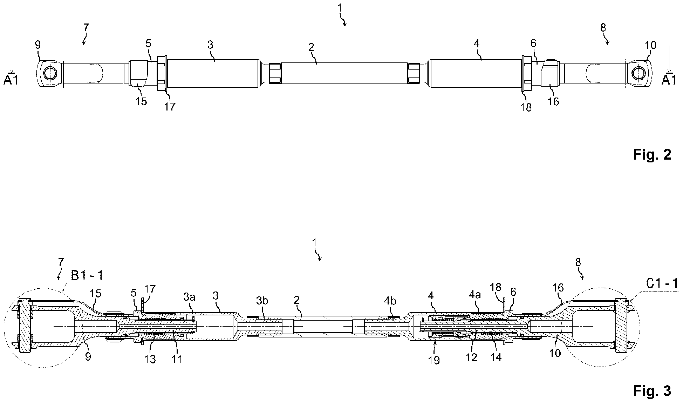

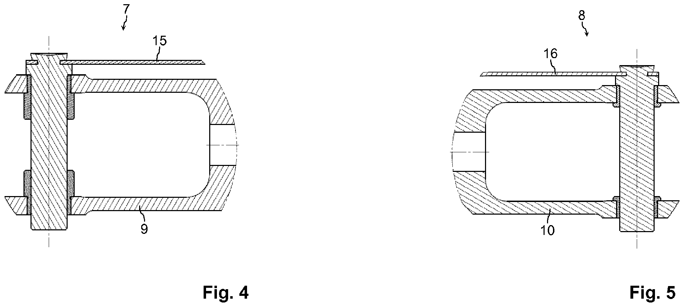

In Fig. 1 bis Fig. 5 ist eine Ausführungsform einer Zug-Druck-Stange 1 gezeigt. Die Zug-Druck-Stange 1 weist einen rohrförmigen hohlzylindrischen Mittelkörper 2 auf, an dessen Enden sich jeweils eine Reduzierhülse 3 bzw. 4 befindet. Die Reduzierhülsen 3, 4 sind hierbei jeweils drehfest (durch eine Gewindeanordnung, eine Presspassung oder eine Klebeverbindung) mit dem Mittelkörper 2 verbunden. Das jeweils dem Mittelkörper 2 abgewandte Ende der Reduzierhülse 3 bzw. 4 ist mit einem Anschlussstück 5 bzw. 6 verbunden. Die Anschlussstücke 5, 6 sind als hülsenförmige Bauteile ausgebildet und ebenfalls jeweils drehfest (durch eine Gewindeanordnung, eine Presspassung oder eine Klebeverbindung) mit der Reduzierhülse 3 bzw. 4 verbunden.

Innerhalb der Anschlussstücke 5, 6 ist jeweils eine Befestigungsvorrichtung 7 bzw. 8 längenveränderlich gelagert, sodass die Länge der Zug-Druck-Stange 1 durch ein Hineindrehen der Befestigungsvorrichtungen 7, 8 in das jeweilige Anschlussstück 5, 6 bzw. ein Herausdrehen der Befestigungsvorrichtungen 7, 8 aus dem Anschlussstück eingestellt werden kann.

Die erste Befestigungsvorrichtung 7 besteht im Wesentlichen aus einem Kupplungselement 9 und einem Schaft 11, der sich durch das hülsenförmige Anschlussstück 5 erstreckt. In ähnlicher Weise besteht die zweite Befestigungsvorrichtung 7 aus einem Kupplungselement 10 und einem Schaft 12, der sich ebenfalls durch das hülsenförmige Anschlussstück 6 erstreckt.

Die Kupplungselemente 9, 10 sind als Gabelköpfe ausgebildet und dienen der Fixierung der Zug-Druck-Stange 1 an den jeweiligen Montagepunkten der die Zug-Druck-Stange 1 umgebenden Konstruktion. Zum Ausgleich einer Lagedifferenz kann die Länge der Zug-Druck-Stange 1, d.h. der Abstand zwischen den Kupplungselementen 9, 10 zueinander, variierte werden. Dazu sind der Schaft 11 bzw. 12 jeweils mit einem außenliegenden Gewinde und das Anschlussstück 5 bzw. 6 mit einem korrespondierenden Innengewinde versehen. Das außenliegende Gewinde des Schaftes 11 und das Innengewinde des Anschlussstückes 5 bilden damit die Gewindeanordnung 13 und das außenliegende Gewinde des Schaftes 12 und das Innengewinde des Anschlussstückes 6 bilden die Gewindeanordnung 14. Dabei ist eine der Gewindeanordnungen 13, 14 als Rechts- und das andere als Linksgewinde ausgeführt.

Über die Gewindeanordnungen 13 und 14 ist damit ein Herein- bzw. Herausschrauben der Befestigungsvorrichtung 7 und/oder 8 möglich, wodurch die Länge der Zug-Druck-Stange 1 variiert werden kann.

In die Kupplungselement 5, 6 ist jeweils ein Schnappbolzen 15 bzw. 16 eingebracht, dessen Schnappring am Außenumfang des Anschlussstückes 5 bzw. 6 angeklappt ist.

Die Reduzierhülse 3 weist einen ersten, der Befestigungsvorrichtung 7 zugewandten Teilbereich 3a mit einem ersten Außendurchmesser und einen zweiten, dem Mittelkörper 2 zugewandten Teilbereich 3b mit einem zweiten Außendurchmesser auf. Der Außendurchmesser des zweiten Teilbereichs 3b (d.h. der zweite Außendurchmesser der Reduzierhülse 3) ist kleiner als der Außendurchmesser des ersten Teilbereichs 3a (d.h. der erste Außendurchmesser der Reduzierhülse 3).

Die Reduzierhülse 4 weist ebenfalls einen ersten, der Befestigungsvorrichtung 8 zugewandten Teilbereich 4a mit einem ersten Außendurchmesser und einen zweiten, dem Mittelkörper 2 zugewandten Teilbereich 4b mit einem zweiten Außendurchmesser auf. Der Außendurchmesser des zweiten Teilbereichs 4b (d.h. der zweite Außendurchmesser der Reduzierhülse 4) ist kleiner als der Außendurchmesser des ersten Teilbereichs 4a (d.h. der erste Außendurchmesser der Reduzierhülse 4).

Der Mittelkörper 2 wiederum besitzt einen Außendurchmesser, der kleiner ist als der Außendurchmesser des ersten Teilbereichs 3a und der Außendurchmesser des ersten Teilbereichs 4a.

Mit anderen Worten weisen die Reduzierhülsen 3, 4 jeweils einen breiten Endbereich auf, in den das Anschlussstück 5 bzw. 6 aufgenommen werden kann und einen schmalen Endbereich, der mit dem Mittelkörper 2 verbunden ist. Auf diese Weise ist zum einen sichergestellt, dass die Anschlussstücke 5, 6 sowie die damit verbundenen Befestigungsvorrichtungen 7 und 8 in einer ausreichenden, den Belastungen standhaltenden Größe dimensioniert werden können und zum anderen gewährleistet, dass der Mittelkörper 2 mit einem relativ geringem Außendurchmesser verwirklicht werden kann. Im Bereich des Mittelkörpers 2 ist die Zug-Druck-Stange 1 damit besonders platzsparend ausgebildet.

Auf der äußeren Mantelfläche des ersten Teilbereichs 3a bzw. 3b ist jeweils eine Manschette 17 bzw. 18 ausgebildet. An diese Manschetten 17, 18 kann jeweils ein Halteband (in den Figuren nicht dargestellt) angebracht werden. Dieses Halteband wiederum kann mit dem Schnappbolzen 15 bzw. 16 verbunden sein, um auf diese Weise als Verliersicherung des Schnappbolzens 15 bzw. 16 zu dienen.

Die zweite Befestigungsvorrichtung 8 wirkt mit einer Rastvorrichtung 19 zusammen. Die Rastvorrichtung 19 ist zwischen der zweiten Befestigungsvorrichtung 8 und dem Anschlussstück 6 vorgesehen, um eine relative Dreh- bzw. Schwenkbewegung der Befestigungsvorrichtung 8 bezüglich dem Anschlussstück 6 nach der Justierung der Gesamtlänge der Zug-Druck-Stange 1 zu verhindern bzw. zu erschweren. Zur konkreten Ausgestaltung der Rastvorrichtung 19 sei auf DE 20 2010 008 858 U1 oder DE 20 2012 103 224 U1 verwiesen.

### BEZUGSZEICHENLISTE

- 1: Zug-Druck-Stange
- 2: Mittelkörper
- 3, 4: Reduzierhülse
- 5, 6: Anschlussstück
- 7, 8: Befestigungsvorrichtung
- 9, 10: Kupplungselement
- 11, 12: Schaft
- 13, 14: Gewindeanordnung
- 15, 16: Schnappbolzen
- 17, 18: Manschette
- 19: Rastvorrichtung

## Patentansprüche

1. Zug-Druck-Stange (1), aufweisend:
- einen hohlzylindrischen Mittelkörper (2);
- zumindest eine Befestigungsvorrichtung (7, 8) mit einem Kupplungselement (9, 10) und einem daran angeordneten Schaft (11, 12);
- zumindest ein Anschlussstück (5, 6), wobei die Befestigungsvorrichtung (7, 8) zur Längenveränderung der Zug-Druck-Stange (1) über eine Gewindeanordnung (13, 14) drehbar mit dem Anschlussstück (5, 6) verbunden ist;
- zumindest eine Reduzierhülse (3, 4) zur Verbindung des Anschlussstückes (5, 6) mit dem Mittelkörper (2);
**dadurch gekennzeichnet, dass** die Reduzierhülse (3, 4) einen ersten, der Befestigungsvorrichtung (7, 8) zugewandten Teilbereich (3a, 4a) mit einem ersten Außendurchmesser und einen zweiten, dem Mittelkörper (2) zugewandten Teilbereich (3b, 4b) mit einem zweiten Außendurchmesser, der kleiner ist als der erste Außendurchmesser, aufweist; und wobei der Außendurchmesser des Mittelkörpers (2) kleiner ist als der erste Außendurchmesser der Reduzierhülse (3, 4).

2. Zug-Druck-Stange (1) nach Anspruch 1, wobei die Reduzierhülse (3, 4) über eine erste Gewindeanordnung mit dem Anschlussstück (5, 6) verbunden ist und/oder über eine zweite Gewindeanordnung mit dem Mittelkörper (2) verbunden ist.

3. Zug-Druck-Stange (1) nach Anspruch 2, wobei die erste Gewindeanordnung aus einem auf einer äußeren Mantelfläche des Anschlussstückes (5, 6) ausgebildeten Gewinde und einem auf einer innenliegenden Mantelfläche des ersten Teilbereich (3a, 4a) der Reduzierhülse (3, 4) ausgebildeten Gewinde gebildet wird.

4. Zug-Druck-Stange (1) nach einem der Ansprüche 2 oder 3, wobei die zweite Gewindeanordnung aus einem auf einer äußeren Mantelfläche des zweiten Teilbereichs (3b) der Reduzierhülse ausgebildeten Gewinde und einem auf einer innenliegenden Mantelfläche des Mittelkörpers (2) ausgebildeten Gewinde gebildet wird.

5. Zug-Druck-Stange (1) nach einem der vorhergehenden Ansprüche, wobei die Reduzierhülse (3, 4) über eine erste Presspassung mit dem Anschlussstück (5, 6) verbunden ist und/oder über eine zweite Presspassung mit dem Mittelkörper (2) verbunden ist.

6. Zug-Druck-Stange (1) nach einem der vorhergehenden Ansprüche, wobei die Reduzierhülse (3, 4) über eine erste Klebeverbindung mit dem Anschlussstück (5, 6) verbunden ist und/oder über eine zweite Klebeverbindung mit dem Mittelkörper (2) verbunden ist.

7. Zug-Druck-Stange (1) nach einem der vorhergehenden Ansprüche, mit einen an das Kupplungselement (9, 10) anbringbaren Schnappbolzen (15, 16), welcher an den Außenumfang des Anschluss-stückes (7, 8) anklappbar ist.

8. Zug-Druck-Stange (1) nach einem der vorhergehenden Ansprüche, wobei um den ersten Teilbereich (3a, 4a) der Reduzierhülse (3, 4) eine Manschette (17, 18) ausgebildet ist.

9. Zug-Druck-Stange (1) nach Anspruch 8, wobei an die Manschette (17, 18) ein Halteband angebracht ist.

## Claims

1. Push-pull link bar (1), having:
- a hollow-cylindrical centre body (2);
- at least one fastening apparatus (7, 8) with a coupling element (9, 10) and a shank (11, 12) which is arranged thereon;
- at least one connector piece (5, 6), the fastening apparatus (7, 8) being connected rotatably to the connector piece (5, 6) for changing the length of the push-pull link bar (1) via a thread arrangement (13, 14);
- at least one reducing bush (3, 4) for connecting the connector piece (5, 6) to the centre body (2); **characterized in that** the reducing bush (3, 4) has a first part region (3a, 4a) which faces the fastening apparatus (7, 8) with a first external diameter and a second part region (3b, 4b) which faces the centre body (2) with a second external diameter which is smaller than the first external diameter; and the external diameter of the centre body (2) being smaller than the first external diameter of the reducing bush (3, 4).

2. Push-pull link bar (1) according to Claim 1, the reducing bush (3, 4) being connected via a first thread arrangement to the connector piece (5, 6) and/or being connected via a second thread arrangement to the centre body (2).

3. Push-pull link bar (1) according to Claim 2, the first thread arrangement being formed from a thread which is configured on an outer circumferential face of the connector piece (5, 6) and a thread which is configured on an inner circumferential face of the first part region (3a, 4a) of the reducing bush (3, 4).

4. Push-pull link bar (1) according to either of Claims 2 and 3, the second thread arrangement being formed from a thread which is configured on an outer circumferential face of the second part region (3b) of the reducing bush and a thread which is configured on an inner circumferential face of the centre body (2).

5. Push-pull link bar (1) according to one of the preceding claims, the reducing bush (3, 4) being connected to the connector piece (5, 6) via a first interference fit and/or being connected to the centre body (2) via a second interference fit.

6. Push-pull link bar (1) according to one of the preceding claims, the reducing bush (3, 4) being connected to the connector piece (5, 6) via a first adhesive bond and/or being connected to the centre body (2) via a second adhesive bond.

7. Push-pull link bar (1) according to one of the preceding claims, having a snap-in bolt (15, 16) which can be attached to the coupling element (9, 10) and can be folded onto the outer circumference of the connector piece (7, 8).

8. Push-pull link bar (1) according to one of the preceding claims, a collar (17, 18) being configured around the first part region (3a, 4a) of the reducing bush (3, 4).

9. Push-pull link bar (1) according to Claim 8, a retaining strap being attached to the collar (17, 18).

## Revendications

1. Barre de traction-compression (1), présentant :
- un corps central cylindrique (2) ;
- au moins un dispositif de fixation (7, 8) avec un élément d'accouplement (9, 10) et une tige disposée sur celui-ci (11, 12) ;
- au moins une pièce de raccordement (5, 6), le dispositif de fixation (7, 8) étant connecté de manière rotative à la pièce de raccordement (5, 6) de manière à modifier la longueur de la barre de traction-compression (1) par le biais d'un agencement fileté (13, 14) ;
- au moins une douille de réduction (3, 4) destinée à raccorder la pièce de raccordement (5, 6) au corps central (2) ;
**caractérisée en ce que**
la douille de réduction (3, 4) présente une première région partielle (3a, 4a) tournée vers le dispositif de fixation (7, 8) avec un premier diamètre extérieur et une deuxième région partielle (3b, 4b) tournée vers le corps central (2) avec un deuxième diamètre extérieur qui est inférieur au premier diamètre extérieur ; et
le diamètre extérieur du corps central (2) étant inférieur au premier diamètre extérieur de la douille de réduction (3, 4).

2. Barre de traction-compression (1) selon la revendication 1, dans laquelle la douille de réduction (3, 4) est connectée à la pièce de raccordement (5, 6) par le biais d'un premier agencement fileté et/ou est connectée au corps central (2) par le biais d'un deuxième agencement fileté.

3. Barre de traction-compression (1) selon la revendication 2, dans laquelle le premier agencement fileté se compose d'un filetage formé sur une surface d'enveloppe extérieure de la pièce de raccordement (5, 6) et un filetage réalisé sur une surface d'enveloppe intérieure de la première région partielle (3a, 4a) de la douille de réduction (3, 4).

4. Barre de traction-compression (1) selon l'une quelconque des revendications 2 ou 3, dans laquelle le deuxième agencement fileté est formé d'un filetage réalisé sur une surface d'enveloppe extérieure de la deuxième région partielle (3b) de la douille de réduction et d'un filetage réalisé sur une surface d'enveloppe intérieure du corps central (2).

5. Barre de traction-compression (1) selon l'une quelconque des revendications précédentes, dans laquelle la douille de réduction (3, 4) est raccordée à la pièce de raccordement (5, 6) par le biais d'un premier ajustement serré et/ou est raccordée au corps central (2) par le biais d'un deuxième ajustement serré.

6. Barre de traction-compression (1) selon l'une quelconque des revendications précédentes, dans laquelle la douille de réduction (3, 4) est raccordée à la pièce de raccordement (5, 6) par le biais d'une première liaison par collage et/ou est raccordée au corps central (2) par le biais d'une deuxième liaison par collage.

7. Barre de traction-compression (1) selon l'une quelconque des revendications précédentes, comprenant un boulon d'encliquetage (15, 16) pouvant être appliqué sur l'élément d'accouplement (9, 10), lequel peut être rabattu contre la périphérie extérieure de la pièce de raccordement (7, 8).

8. Barre de traction-compression (1) selon l'une quelconque des revendications précédentes, dans laquelle une manchette (17, 18) est réalisée autour de la première région partielle (3a, 4a) de la douille de réduction (3, 4).

9. Barre de traction-compression (1) selon la revendication 8, dans laquelle une bande de retenue est montée sur la manchette (17, 18).
